# FASCICULE DE BREVET EUROPEEN

(11) **EP 3 985 452 B1**
(45) Date de publication et mention de la délivrance du brevet: **27.11.2024**
(21) Numéro de dépôt: 20202329.7
(22) Date de dépôt: 16.10.2020
(51) Int. Cl.: G04B 47/06, G04D 7/00

(54) **DISPOSITIF DE MESURE D'UN DEGRE D'HUMIDITE RELATIVE DANS L'ENCEINTE D'UN BOITIER D'UNE MONTRE**
VORRICHTUNG ZUM MESSEN EINES RELATIVEN FEUCHTIGKEITSGRADS IM GEHÄUSE EINER ARMBANDUHR
DEVICE FOR MEASURING A DEGREE OF RELATIVE HUMIDITY IN THE ENCLOSURE OF A WATCH CASE

(43) Date de publication de la demande: 20.04.2022
(73) Titulaire: The Swatch Group Research and Development Ltd, 2074 Marin (CH)
(72) Inventeur: DUBUGNON, Dominique, 1162 Saint-Prex (CH); BLATTER, M. Cédric, 1291 Commugny (CH); WILLEMIN, Michel, 2515 Prêles (CH)
(74) Mandataire: ICB SA

(56) Documents cités:
- EP-A1- 1 388 766
- EP-A1- 3 598 246
- CH-A2- 708 924
- CN-A- 105 629 713

## Description

### DOMAINE TECHNIQUE DE L'INVENTION

L'invention concerne un dispositif de mesure d'un degré d'humidité relative dans l'enceinte d'un boîtier d'une montre.
L'invention concerne aussi un ensemble de détermination d'un degré d'humidité relative à l'intérieur d'une montre comprenant un tel dispositif de mesure.

### ETAT DE LA TECHNIQUE

L'étanchéité d'une montre est mesurée en bars (le bar est une unité de pression, 1 bar équivalant à 1 atmosphère (atm). Le degré d'étanchéité d'une montre est souvent indiqué en mètres (m). Les montres désignées comme étanches sont destinées à une utilisation quotidienne courante qui doit garantir une résistance à l'eau, dans des activités telles que par exemple la natation, ou plus simplement sous la douche. Les montres dites de plongée doivent respecter des normes plus strictes, et garantir selon la norme actuelle l'étanchéité à une profondeur minimum de 100 m.

Pour garantir l'étanchéité, les montres sont en général munies d'un jeu de joints d'étanchéité positionnés dans les points d'assemblage de certaines pièces de la montre, telles que la glace, la lunette et le fond de la montre, ainsi que d'éléments mobiles tels que la couronne et les boutons poussoir. Avec le temps et l'utilisation, les propriétés mécaniques des joints se modifient et l'étanchéité de la montre peut parfois se détériorer. La montre devient alors plus perméable à l'eau ou à la vapeur d'eau. Les conséquences peuvent être des phénomènes de condensation sur la face intérieure de la glace de la montre, ou pire, d'oxydation de certains composants métalliques ou de dégradation de certains composants polymères. Il existe ainsi un besoin de pouvoir surveiller de temps en temps le degré d'humidité relative dans la montre sans forcément devoir l'ouvrir, une ouverture du boîtier de montre nécessitant un changement systématique des joints et faisant intervenir un horloger ce qui est coûteux. Un excès de vapeur d'eau dans la montre peut en effet indiquer qu'un ou plusieurs joints doivent être remplacés à court ou moyen terme.

Afin de répondre à ce besoin, il est connu des montres comportant un dispositif de mesure du degré d'humidité relative à l'intérieur de la montre. Un tel dispositif de mesure se présente sous la forme d'un module électronique apte à mesurer et enregistrer des valeurs de différents paramètres environnementaux, dont l'humidité relative. Du fait de la taille réduite d'un tel module électronique, ce dernier peut être agencé à l'intérieur d'un boîtier de montre et mesurer, via un capteur dédié, le degré d'humidité relative à l'intérieur du boîtier de montre. Il est ensuite possible de transmettre les valeurs d'humidité relatives mesurées à une station d'accueil de la montre par voie sans fil, typiquement par voie infrarouge ou radiofréquences. Le signal par exemple infrarouge émis par le module électronique traverse alors une portion transparente du boîtier de montre, typiquement la glace et est reçu par un capteur infrarouge de la station d'accueil. Un utilisateur de la montre peut ensuite visualiser les valeurs d'humidité relative mesurées via un ordinateur relié à la station d'accueil et muni d'un logiciel dédié ou un smartphone. EP 3 598 246 A1 divulgue un dispositif de mesure d'un degré d'humidité relative dans l'enceinte d'un boîtier d'une montre comprenant : un module émetteur pourvu d'une source de rayonnement lumineux apte à émettre des faisceaux lumineux vers l'enceinte dudit boîtier et une unité de contrôle configurée pour évaluer le taux de vapeur d'eau présent dans un fluide gazeux compris dans ladite enceinte.

Toutefois, un inconvénient d'un tel dispositif électronique de mesure est qu'il nécessite une batterie ou une pile pour pouvoir alimenter les différents composants électroniques. Un tel dispositif est ainsi très peu adapté à des montres mécaniques notamment. De plus, pour des montres électroniques, il peut pénaliser l'autonomie d'un produit ou nécessiter de prendre une pile de plus grande capacité et donc augmenter le volume de la montre.

Un autre inconvénient est qu'un tel dispositif est relativement encombrant et peu discret à l'intérieur de la montre. En outre, un tel dispositif électronique de mesure est relativement onéreux et impacte donc le coût de fabrication de la montre.

### RESUME DE L'INVENTION

L'invention a donc pour but de fournir un dispositif de mesure du degré d'humidité relative présent à l'intérieur d'un boîtier de montre contribuant à détecter un défaut d'étanchéité d'un tel boîtier et ce, en permettant une surveillance du degré d'humidité relative dans ce boîtier sans devoir l'ouvrir. Un tel dispositif de mesure est économique, simple à mettre en oeuvre, et permet une mesure fiable et rapide du degré d'humidité relative à l'intérieur du boîtier de montre.

L'invention concerne un dispositif de mesure d'un degré d'humidité relative dans l'enceinte d'un boîtier d'une montre, selon la revendication 1.

Dans d'autres modes de réalisation :
- le module émetteur est apte à émettre des faisceaux de lumière à impulsions courtes ;
- le module récepteur comprend au moins un transducteur électro-acoustique ;
- le module récepteur comprend un microphone à pression ou un microphone à gradient de pression ;
- le module récepteur comprend un microphone optique ;
- le microphone optique comprend une source de rayonnement électromagnétique, des éléments réfléchissants tels que des miroirs, au moins un détecteur de ce rayonnement électromagnétique et un interféromètre ;
- l'unité de contrôle comprend dans ses éléments de mémoire une ou plusieurs tables de correspondance entre des valeurs de signaux acoustiques avec des valeurs de taux de vapeur d'eau présents dans un fluide gazeux compris dans ladite enceinte ;
- la source de rayonnement lumineux est une source laser et le fluide gazeux est de l'air comprenant de la vapeur d'eau.

L'invention concerne aussi un ensemble de détermination d'un degré d'humidité relative à l'intérieur d'une montre comprenant ladite montre et un tel dispositif de mesure.

### BREVE DESCRIPTION DES FIGURES

Les buts, avantages et caractéristiques de ce dispositif de mesure d'un degré d'humidité relative à l'intérieur d'une montre, apparaîtront mieux dans la description suivante sur la base d'au moins une forme d'exécution non limitative illustrée par les dessins dans lesquels :
- la figure 1 est une représentation schématique d'un ensemble de détermination d'un degré d'humidité relative à l'intérieur d'une montre comprenant un dispositif de mesure du degré d'humidité relative de cet intérieur de la montre, selon un mode de réalisation de l'invention ;
- la figure 2 est une vue schématique d'une première variante du dispositif de mesure du degré d'humidité relative comprenant un module récepteur comportant un microphone à pression ou à gradient de pression, selon le mode de réalisation de l'invention ;
   - la figure 3 est une vue schématique d'une deuxième variante du dispositif de mesure du degré d'humidité relative comprenant un module récepteur comportant un microphone optique, selon le mode de réalisation de l'invention, et
   - la figure 4 est une vue schématique du procédé de fonctionnement du dispositif de mesure, selon le mode de réalisation de l'invention.

### DESCRIPTION DETAILLEE DE L'INVENTION

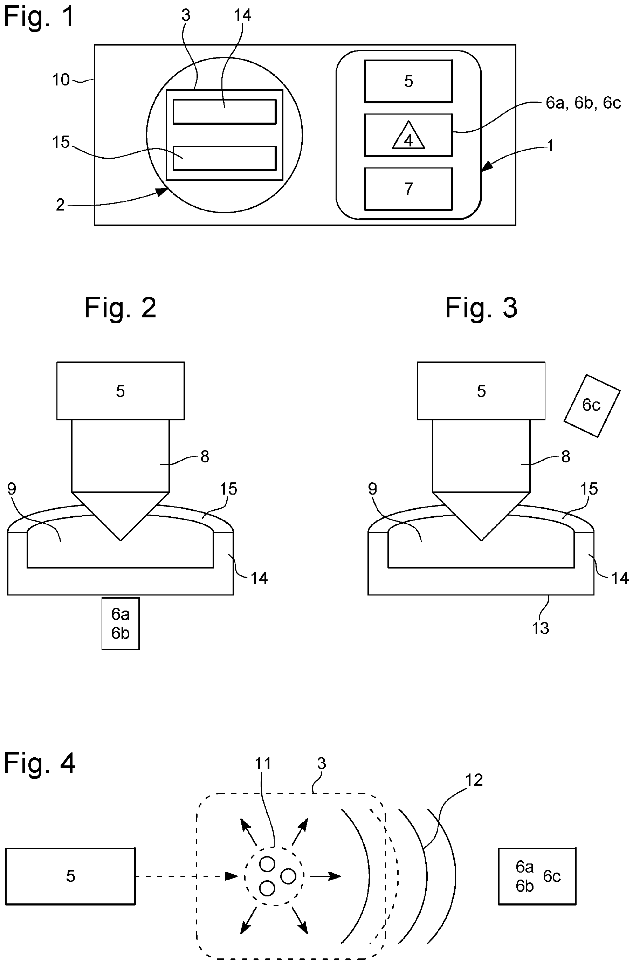

Sur les figures 1 à 3 est représenté l'ensemble de mesure 10 d'un degré d'humidité relative à l'intérieur d'une montre 2. Cet ensemble 10 comprend un dispositif de mesure 1 d'un degré d'humidité relative à l'intérieur de la montre 2 ainsi que cette montre 2. On notera que les figures 2 et 3 présentent deux variantes de ce dispositif de mesure 1 qui diffèrent par la technologie utilisée dans un module récepteur 6a à 6c d'au moins un signal acoustique 12 que nous évoquerons dans la suite.

On précise ici qu'il convient d'entendre par « degré d'humidité relative » le rapport entre la pression partielle de la vapeur d'eau contenue dans l'air et la pression de vapeur saturante (ou tension de vapeur) à la même température. Autrement dit, la mesure du degré d'humidité relative correspond à une mesure du rapport entre le contenu en vapeur d'eau de l'air et sa capacité maximale à en contenir dans les mêmes conditions de température.

On notera que la montre 2 peut être une montre 2 de tout type, telle que par exemple une montre 2 mécanique ou encore une montre 2 électronique.

Dans cette configuration, le dispositif de mesure 1 comprend un module émetteur 5 comprenant une source rayonnement lumineux et qui est apte à émettre des faisceaux lumineux 8 vers l'enceinte 9 dudit boîtier 3. Le dispositif 1 comprend également un module récepteur 6a à 6c d'au moins un signal acoustique 12 provenant de ladite enceinte 9 et une unité de contrôle 7 connectée à ces deux modules 5, 6.

Dans ce module émetteur 5, la source de rayonnement lumineux est de préférence une source laser. Alternativement, cette source rayonnement lumineux peut être une source lumineuse infrarouge. Ce module émetteur 5 comprend un élément de modulation 4 de ladite source rayonnement lumineux configuré pour engendrer au moins un signal acoustique 12 dans ladite enceinte 9 du boîtier 3 sous l'effet des faisceaux lumineux, ici des faisceaux lasers, émis, par le module émetteur. Autrement dit, ledit élément de modulation 4 de ladite source de rayonnement lumineux est configuré pour que ledit module émetteur 5 émette des faisceaux lumineux susceptibles d'engendrer une génération d'au moins un signal acoustique 12 par le fluide gazeux 11 comprenant la vapeur d'eau compris dans l'enceinte 9 du boîtier 3.

Effectivement en référence à la figure 4, les molécules du fluide gazeux 11, ici de l'air comprenant notamment de la vapeur d'eau, qui sont présentes dans l'enceinte 9 du boîtier 3, sont excitées à un état quantique électronique, vibrationnel ou rotationnel supérieur en absorbant le rayonnement électromagnétique constitué par ces faisceaux lumineux modulés émis par le module émetteur 5. De manière générale le dépeuplement de cet état quantique vers des états inférieurs se produit soit par fluorescence, soit par collisions, ces dernières donnant lieu à une augmentation de température du fluide gazeux 11 due notamment à processus de transfert d'énergie. Ce processus de relaxation non radiatif se produit lorsque le temps de relaxation peut entrer en compétition avec la durée de vie radiative des niveaux d'énergie excités. Ainsi, l'élément modulateur 4 du module émetteur 5 en modulant la source rayonnement, contribue alors à faire varier périodiquement la température de ce fluide gazeux 11 présent dans l'enceinte 9 du boîtier 3 ce qui donne lieu à un changement de pression périodique dans cette enceinte 9 qui est à l'origine de la génération dudit au moins un signal acoustique 12 dans cette enceinte. On notera que la température peut aussi moduler un indice de réfraction, ce qui peut être détecté optiquement

Un tel module émetteur 5 est apte à émettre des impulsions lasers femtosecondes et/ou nanosecondes. De telles impulsions femtosecondes peuvent être élaborées à partir d'un laser en lumière visible ou proche infrarouge et les impulsions nanosecondes peuvent être construites à partir de lumière ultraviolet. En particulier, on notera que le module émetteur 5 est apte à émettre en simultanée ou en série plusieurs faisceaux lumineux à des longueurs d'ondes possédant des coefficients d'absorption différentes dans le fluide gazeux 11 comprenant la vapeur d'eau. En complément, on notera que ce module est apte à émettre un laser de type laser YAG pompé optiquement au moyen de lampes flash ou de diodes laser, ou encore de type laser à colorant plus connu sous la dénomination en langue anglaise « dye laser ».

On notera que le module émetteur 5 peut aussi comprend un oscillateur paramétrique optique connu également sous l'acronyme « OPO ». Cet oscillateur est une source de lumière cohérente et monochromatique qui est de préférence utilisée pour produire des longueurs d'onde là où des lasers font défaut.

Dans ce dispositif de mesure 1, le module récepteur 6a à 6c dudit au moins un signal acoustique 12 provenant de ladite enceinte 9 comprend au moins un transducteur électro-acoustique qui est apte à convertir un signal acoustique 12 en un signal électrique. Dans une première variante du dispositif de mesure 1, un tel module émetteur 6a, 6b peut comprendre au moins un microphone à pression 6a ou à gradient de pression 6c généralement pourvu d'une membrane ou d'un élément piézoélectrique qui est apte à se déformer et/ou à se mouvoir sous l'effet d'un signal ou onde acoustique. Dans une deuxième variante du dispositif de mesure 1, ce module émetteur 6 peut comprendre au moins un microphone optique 6c. Un tel microphone 6c qui est décrit plus en détail dans le document de brevet européen EP2338287B1, est un dispositif qui est apte à convertir un signal acoustique 12 en un signal électrique et ce, à partir d'une technologie basée sur l'interférométrie. Un tel microphone 6c comprend notamment une source de rayonnement électromagnétique, des éléments réfléchissants tels que des miroirs, au moins un détecteur de ce rayonnement électromagnétique et un interféromètre tel qu'un interféromètre Fabry-Pérot ou encore un agencement Gires-Tournois. On notera que dans une autre variante de ce dispositif de mesure 1, le module émetteur 6a à 6c peut comprendre une combinaison quelconque de microphones 6a à 6c suivants : au moins un microphone à pression 6a, au moins un microphone à gradient de pression 6b et au moins un microphone optique 6c.

Ainsi que nous l'avons vu, le dispositif de mesure 1 comprend aussi une unité de contrôle 7 connectée aux modules émetteur et récepteur 5, 6. Cette unité de contrôle est configurée pour évaluer le taux de vapeur d'eau présent dans le fluide gazeux 11 compris dans ladite enceinte en fonction dudit au moins signal acoustique 12 reçu par le module récepteur 6a à 6c. Cette unité de contrôle 7 peut être un ordinateur. Il comprend des ressources matérielles et logicielles en particulier au moins un processeur coopérant avec des éléments de mémoire. Cette unité de contrôle 7 est apte à exécuter des instructions pour la mise en oeuvre d'un programme d'ordinateur afin de contribuer à la détermination de la mesure du degré d'humidité relative dans l'enceinte 9 du boîtier 3 de la montre 2.

Cette unité de contrôle 7 est connectée aux modules émetteur et récepteur 5, 6a, 6b, 6c. Il est apte dans ces conditions à piloter ces modules 5, 6a, 6b, 6c, afin de participer à l'estimation de la mesure du degré d'humidité relative dans l'enceinte 9 de la boîtier 3, et est également apte à déterminer des valeurs de signaux acoustiques 12 mesurés pas le module récepteur 6a à 6c. L'unité de contrôle 7 est en particulier apte à mettre en oeuvre des opérations de traitement du signal au travers d'opérations de modulation de signal et de détection synchrone. Une telle unité de contrôle 7 comprend par exemple dans ses éléments de mémoire une ou plusieurs tables de correspondance entre des valeurs de signaux acoustiques avec des valeurs de taux de vapeur d'eau présent dans le fluide gazeux 11 et ce, afin de participer à l'évaluation du degré d'humidité dans le boîtier 3. On comprend qu'à partir d'une valeur de taux de vapeur d'eau présent dans le fluide gazeux 11, l'unité de contrôle 7 est apte à déterminer le degré d'humidité relative dans l'enceinte 9 du boîtier 3.

On notera que le dispositif de mesure peut comprendre des capteurs de température permettant de mesurer la température de la montre et aussi celle régnant dans l'environnement dans laquelle cette dite montre est située. Ces capteurs sont connectés à l'unité de contrôle 7 et participent à l'évaluation du degré d'humidité dans le boîtier 3. En effet, cette évaluation est notamment réalisée lorsque la température de la montre et celle de son environnement sont sensiblement les mêmes ou strictement les mêmes.

Dans cet ensemble 10, la montre est donc pourvue du boîtier 3. Un tel boîtier 3 comporte une carrure 14 qui est par exemple de forme annulaire et qui est munie d'un rebord annulaire supérieur sur lequel s'appuie une glace 15 de ce boîtier 3. Cette glace 3 encore appelée « verre » peut être de manière non limitative et non exhaustive un verre minéral ou encore un verre saphir présentant une épaisseur qui est configurée pour permettre tout du moins une transmission des faisceaux lumineux du module émetteur.

Dans le boîtier 3 de montre 2 pris en exemple aux figures 2 et 3, sa configuration est sensiblement circulaire. Toutefois, l'invention n'est nullement limitée à une telle configuration de cette boîtier 3 de montre 2.

Dans l'ensemble de mesure 10, le module récepteur 6a, 6b lorsqu'il comprend un microphone à pression 6a ou à gradient de pression 6b peut être agencé en regard de l'une quelconque des différentes parties du boîtier 3 à savoir en regard du fond 13, de la carrure 14 ou de la glace 15. Lorsque ce module récepteur 6c comprend un microphone optique 6c il est alors disposé en regard de la glace 15 du boîtier 3.

On notera dans une variante que le module récepteur 6c connecté à l'unité de contrôle peut être apte à mesurer les vibrations de la carrure afin de participer à l'évaluation du degré d'humidité relative dans l'enceinte du boîtier de la montre. En outre, le dispositif de mesure 1 peut être un dispositif portatif ou mobile, c'est-à-dire un dispositif 1 apte à être porté par un utilisateur sans nécessiter de raccordement filaire pour son alimentation électrique.

D'autre part, ce dispositif de mesure 1 peut comprendre un élément d'affichage apte à afficher plusieurs signaux visuels distincts en fonction de la valeur du degré d'humidité relative déterminée par l'unité de contrôle 7. Chaque signal visuel affiché par l'élément d'affichage correspond alors, selon les cas, à une valeur de degré d'humidité relative prédéterminée, ou à une valeur différentielle d'humidité relative prédéterminée. Cet élément d'affichage peut être un écran pourvu de diodes électroluminescentes ou peut correspondre plus simplement à des indicateurs lumineux à diodes électroluminescentes, l'allumage d'une diode donnée correspondant à un seuil d'humidité relative prédéterminé.

## Revendications

1. Dispositif de mesure (1) d'un degré d'humidité relative dans l'enceinte (9) d'un boîtier (3) d'une montre (2), le dispositif (1) comprenant :
- un module émetteur (5) pourvu d'une source de rayonnement lumineux apte à émettre des faisceaux lumineux (8) à travers la glace dudit boîtier (3) vers l'enceinte (9) dudit boîtier (3), le module émetteur (5) comprend un élément de modulation (4) de ladite source de rayonnement lumineux configuré pour que ledit module émetteur (5) émette des faisceaux lumineux susceptibles d'engendrer une génération d'au moins un signal acoustique (12) par un fluide gazeux (11) comprenant la vapeur d'eau compris dans l'enceinte du boîtier (3). ;
- un module récepteur (6a, 6b, 6c) d'au moins un signal acoustique (12) provenant de ladite enceinte (9), et
- une unité de contrôle (7) connectée aux dits modules (5, 6) qui est configurée pour évaluer le taux de vapeur d'eau présent dans un fluide gazeux (11) compris dans ladite enceinte (9) en fonction dudit au moins signal acoustique (12) reçu par le module récepteur (6a, 6b, 6c).

2. Dispositif de mesure (1) selon la revendication précédente, **caractérisé en ce que** le module émetteur (5) est apte à émettre des faisceaux de lumière à impulsions courtes.

3. Dispositif de mesure (1) selon l'une quelconque des revendications précédentes, **caractérisé en ce que** le module récepteur (6a, 6b) comprend au moins un transducteur électro-acoustique.

4. Dispositif de mesure (1) selon l'une quelconque des revendications précédentes, **caractérisé en ce que** le module récepteur (6a, 6b) comprend un microphone à pression (6a) ou un microphone à gradient de pression (6b).

5. Dispositif de mesure (1) selon l'une quelconque des revendications précédentes, **caractérisé en ce que** le module récepteur (6c) comprend un microphone optique (6c).

6. Dispositif de mesure (1) selon la revendication précédente, **caractérisé en ce que**, le microphone optique (6c) comprend une source de rayonnement électromagnétique, des éléments réfléchissants tels que des miroirs, au moins un détecteur de ce rayonnement électromagnétique et un interféromètre.

7. Dispositif de mesure (1) selon l'une quelconque des revendications précédentes, **caractérisé en ce que** l'unité de contrôle (7) comprend dans ses éléments de mémoire une ou plusieurs tables de correspondance entre des valeurs de signaux acoustiques avec des valeurs de taux de vapeur d'eau présents dans un fluide gazeux (11) compris dans ladite enceinte.

8. Dispositif de mesure (1) selon l'une quelconque des revendications précédentes, **caractérisé en ce que** la source de rayonnement lumineux est une source laser et le fluide gazeux (11) est de l'air comprenant de la vapeur d'eau.

9. Ensemble de détermination (1) d'un degré d'humidité relative à l'intérieur d'une montre (2) comprenant ladite montre (2) et un dispositif de mesure (1) selon l'une quelconque des revendications précédentes.

## Patentansprüche

1. Vorrichtung zum Messen (1) eines relativen Feuchtigkeitsgrades in der Schutzhülle (9) eines Gehäuses (3) einer Uhr (2), wobei die Vorrichtung (1) umfasst:
- ein Sendermodul (5), das mit einer Lichtstrahlungsquelle versehen ist, die imstande ist, Lichtstrahlen (8) durch das Glas des Gehäuses (3) hindurch zur Schutzhülle (9) des Gehäuses (3) zu senden, wobei das Sendermodul (5) ein Element zur Modulation (4) der Lichtstrahlungsquelle umfasst, das konfiguriert ist, damit das Sendermodul (5) Lichtstrahlen aussendet, die eine Erzeugung mindestens eines akustischen Signals (12) durch ein gasförmiges Fluid (11), das den in der Schutzhülle des Gehäuses (3) enthaltenen Wasserdampf enthält, verursachen können;
- ein Empfängermodul (6a, 6b, 6c) für mindestens ein aus dem Gehäuse (9) stammendes akustisches Signal (12), und
- eine Steuereinheit (7), die mit den Modulen (5, 6) verbunden ist, die konfiguriert ist, um den in einem gasförmigen Fluid (11) vorhandenen Wasserdampfgehalt, das in der Schutzhülle (9) enthalten ist, in Abhängigkeit von dem mindestens einen akustischen Signal (12), das von dem Empfängermodul (6a, 6b, 6c) empfangen wird, zu bewerten.

2. Vorrichtung zum Messen (1) nach dem vorstehenden Anspruch, **dadurch gekennzeichnet, dass** das Sendermodul (5) imstande ist, Lichtstrahlen mit kurzen Impulsen zu senden.

3. Vorrichtung zum Messen (1) nach einem der vorstehenden Ansprüche, **dadurch gekennzeichnet, dass** das Empfängermodul (6a, 6b) mindestens einen elektroakustischen Wandler umfasst.

4. Vorrichtung zum Messen (1) nach einem der vorstehenden Ansprüche, **dadurch gekennzeichnet, dass** das Empfängermodul (6a, 6b) ein Druckmikrofon (6a) oder ein Druckgradienten-Mikrofon (6b) umfasst.

5. Vorrichtung zum Messen (1) nach einem der vorstehenden Ansprüche, **dadurch gekennzeichnet, dass** das Empfängermodul (6c) ein optisches Mikrofon (6c) umfasst.

6. Vorrichtung zum Messen (1) nach dem vorstehenden Anspruch, **dadurch gekennzeichnet, dass** das optische Mikrofon (6c) eine elektromagnetische Strahlungsquelle, reflektierende Elemente wie Spiegel, mindestens einen Detektor für diese elektromagnetische Strahlung und ein Interferometer umfasst.

7. Vorrichtung zum Messen (1) nach einem der vorstehenden Ansprüche, **dadurch gekennzeichnet, dass** die Steuereinheit (7) in ihren Speicherelementen eine oder mehrere Entsprechungstabellen zwischen den Werten akustischer Signale mit Werten von Wasserdampfgehalten, die in einem gasförmigen Fluid (11), das in der Schutzhülle enthalten ist, umfasst.

8. Vorrichtung zum Messen (1) nach einem der vorstehenden Ansprüche, **dadurch gekennzeichnet, dass** die Lichtstrahlungsquelle eine Laserquelle ist und das gasförmige Fluid (11) wasserdampfhaltige Luft ist.

9. Einheit zum Bestimmen (1) eines relativen Feuchtigkeitsgrades im Inneren einer Uhr (2), umfassend die Uhr (2) und eine Vorrichtung zum Messen (1) nach einem der vorstehenden Ansprüche.

## Claims

1. Device (1) for measuring a relative humidity level inside the enclosure (9) of a case (3) of a watch (2), the device (1) comprising:
- an emitter module (5) provided with a source of light radiation capable of emitting light beams (8) through the crystal of said case (3) towards the enclosure (9) of said case (3), the emitter module (5) comprises an element (4) for modulating said source of light radiation configured such that said emitter module (5) emits light beams capable of ensuring a generation of at least one acoustic signal (12) by a gaseous fluid (11) containing the water vapour contained in the enclosure of the case (3);
- a receiver module (6a, 6b, 6c) for receiving at least one acoustic signal (12) from said enclosure (9), and
- a control unit (7) connected to said modules (5, 6) and which is configured to evaluate the water vapour content of a gaseous fluid (11) contained inside said enclosure (9) as a function of said at least one acoustic signal (12) received by the receiver module (6a, 6b, 6c).

2. Measuring device (1) according to the preceding claim, **characterised in that** the emitter module (5) is capable of emitting short-pulse light beams.

3. Measuring device (1) according to any one of the preceding claims, **characterised in that** the receiver module (6a, 6b) comprises at least one electroacoustic transducer.

4. Measuring device (1) according to any one of the preceding claims, **characterised in that** the receiver module (6a, 6b) comprises a pressure microphone (6a) or a pressure-gradient microphone (6b).

5. Measuring device (1) according to any one of the preceding claims, **characterised in that** the receiver module (6c) comprises an optical microphone (6c).

6. Measuring device (1) according to the preceding claim, **characterised in that** the optical microphone (6c) comprises a source of electromagnetic radiation, reflective elements such as mirrors, at least one detector for detecting this electromagnetic radiation and an interferometer.

7. Measuring device (1) according to any one of the preceding claims, **characterised in that** the control unit (7) comprises, in the memory elements thereof, one or more look-up tables for matching values of acoustic signals with values of water vapour contents of a gaseous fluid (11) contained inside said enclosure.

8. Measuring device (1) according to any one of the preceding claims, **characterised in that** the source of light radiation is a laser source and the gaseous fluid (11) is air containing water vapour.

9. Assembly (1) for determining a relative humidity level inside a watch (2) comprising said watch (2) and a measuring device (1) according to any one of the preceding claims.
